# EUROPÄISCHE PATENTSCHRIFT

(11) **EP 0 757 636 B1**
(45) Veröffentlichungstag und Bekanntmachung des Hinweises auf die Patenterteilung: **02.06.1999**
(21) Anmeldenummer: 95917349.3
(22) Anmeldetag: 21.04.1995
(51) Int. Cl.: B60S 1/38

(54) **WINDLEITSCHAUFEL FÜR EIN WISCHBLATT EINER SCHEIBENWISCHERVORRICHTUNG**
WIND DEFLECTOR FOR A WIPER BLADE OF A WINDSCREEN WIPER
DEFLECTEUR POUR BALAI D'ESSUIE-GLACE

(30) Priorität: 29.04.1994 DE 4415065
(43) Veröffentlichungstag der Anmeldung: 12.02.1997
(73) Patentinhaber: ITT Automotive Europe GmbH, 60488 Frankfurt (DE)
(72) Erfinder: BOMMER, Jürgen, D-71732 Tamm (DE); WAIBLE, Siegfried, D-74223 Flein (DE); SCHMID, Eckhardt, D-74336 Brackenheim (DE)
(74) Vertreter: Dreiss, Fuhlendorf, Steimle & Becker
(86) Internationale Anmeldenummer: EP9501511
(87) Internationale Veröffentlichungsnummer: WO9529826

(56) Entgegenhaltungen:
- EP-A- 0 398 376
- DE-A- 4 017 078
- GB-A- 2 278 270
- PATENT ABSTRACTS OF JAPAN vol. 018 no. 611 (M-1708) ,21.November 1994 & JP,A,06 234353 (ICHIKOH IND LTD ET AL) 23.August 1994,

## Beschreibung

Die Erfindung bezieht sich auf eine Windleitschaufel für ein Wischblatt einer Scheibenreinigungsvorrichtung gemäß dem Oberbegriff des Anspruches 1.

Es sind bereits Windleitschaufeln für die Befestigung am Hauptbügel eines Wischblattes bekannt.

Aus EP 0 398 376 A1 ist eine Windleitschaufel ersichtlich, die mit insgesamt zwei Befestigungsabschnitten am Hauptbügel eines Wischblattes zu befestigen ist. Der Hauptbügel ist im Querschnitt im wesentlichen U-förmig ausgebildet und hat einen Rücken, von dem aus sich zwei Seitenwände nach unten in Richtung der zu reinigenden Scheibe erstrecken. Im Rücken des Hauptbügels befinden sich Durchbrüche, die nicht unmittelbar bis an die Seitenwände heranreichen. Die Befestigung der Windleitschaufel erfolgt mit jedem der zwei Befestigungsabschnitte im Bereich eines der Durchbrüche im Rücken des Hauptbügels, wobei die Befestigungsabschnitte von oben auf den Rücken des Hauptbügels aufgesetzt sind. Einer der Befestigungsabschnitte ist so ausgebildet, daß er mit einem vorstehenden Absatz die Kante des Durchbruches im Hauptbügelrücken hintergreift. Der zweite Befestigungsabschnitt liegt oben auf dem Rand eines Durchbruches auf und von unten ist ein Formteil in den Hauptbügel eingelegt, wobei mittels einer Befestigungsschraube die beiderseits des Durchbruches angeordneten Teile des Befestigungsabschnittes und des Formteiles miteinander verschraubt sind.

Bei einer derartigen Befestigung ist nicht auszuschließen, daß bei entsprechender Krafteinwirkung durch die auf die Windleitschaufel auftreffende Luftströmung die Windleitschaufel relativ zum Hauptbügel verschoben wird. Dadurch können die Strömungsverhältnisse ungewollt negativ beeinflußt werden. Andererseits ist nicht auszuschließen, daß sich die Befestigung des nicht verschraubten Befestigungsabschnittes ungewollt lösen kann. Außerdem scheint eine Befestigung mit nur zwei Befestigungspunkten für längere Windleitschaufeln nicht geeignet zu sein. Bei der EP 0 398 376 A 1 ist die Windleitschaufel kürzer als der Hauptbügel und damit erheblich kürzer als das Traggestell des Wischblattes. Damit ist die erzielbare Erhöhung der Anpreßkraft des Wischblattes gegen die Scheibe entsprechend gering. Außerdem ist die Montage der Windleitschaufel am Wischblatt etwas aufwendig, weil die Windleitschaufel sowie das Formteil und die Befestigungsschraube gleichzeitig einzeln gehandhabt werden müssen, wobei sie in Montageposition zu bringen und dann bis zur endgültigen Montage in dieser zu halten sind.

Aus der EP 0 433 169 A 1 ist eine andere aus Kunststoff hergestellte Windleitschaufel für ein Wischblatt mit einem im Querschnitt im wesentlichen u-förmigen Hauptbügel bekannt. Diese Windleitschaufel, die etwas länger als der Hauptbügel aber deutlich kürzer als das Traggestell des Wischblattes ist, ist mit zwei relativ schmalen Befestigungsabschnitten am Hauptbügel zu befestigen. Dazu sind die beiden Befestigungsabschnitte in gleicher Weise im Querschnitt dem Querschnitt des Hauptbügels angepaßt und an beiden U-Schenkeln mit Rastvorsprüngen versehen, welche jeweils einen unteren Rand einer Seitenwand des Hauptbügels untergreifen können. Diese Windleitschaufel wird also vorteilhaft einfach durch bloßes Aufrasten auf den Hauptbügel am Wischblatt befestigt. Ein Mangel besteht wiederum darin, daß ein Verschieben der Windleitschaufel am Wischblatt oder auch ein ungewolltes Lösen einer oder beider Rastverbindungen nicht auszuschließen ist. Weiterhin erkennt der Fachmann, daß die Herstellung der einwärts gerichteten Rastvorsprünge an den U-Schenkeln der Befestigungsabschnitte verfahrenstechnisch bzw. werkzeugtechnisch das Erzeugen jeweils eines schlitzartigen Durchbruches im Rücken jedes Befestigungsabschnittes erfordert. In das entsprechende Formwerkzeug muß nämlich für die Hinterschnitte der Rastvorsprünge jeweils ein zusätzlicher Schieber benutzt werden, der diese Durchbrüche im Rücken der Befestigungsabschnitte entstehen läßt. Diese Durchbrüche wiederum schwächen den tragenden Querschnitt des Rückens der Befestigungsabschnitte so stark, daß die Gefahr des Bruches an dieser Stelle bei Belastung besteht. Die erforderliche Stabilität und Festigkeit der Verbindung von Windleitschaufel und Wischblatt kann nicht gewährleistet werden.

Aufgabe der Erfindung ist es, eine Windleitschaufel der eingangs genannten Art so weiterzuentwickeln, daß sowohl bei der Erstausrüstung als auch bei der Nachrüstung geeigneter Wischblätter eine ausreichende Festigkeit bzw. Stabilität sowohl der Befestigungsabschnitte der Windleitschaufel als auch der Verbindung von windleitschaufel und Wischblatt gewährleistet ist.

Erfindungsgemäß wird die Aufgabe durch eine windleitschaufel mit den Merkmalen des Oberbegriffs des Anspruchs 1 gelöst, wonach die Windleitschaufel neben ersten Befestigungsabschnitten zum Anschrauben an den Hauptbügel des Wischblattes auch noch zusätzliche zweite Befestigungsabschnitte zum Aufrasten auf die in Fahrtrichtung vornliegende Seitenwand des Hauptbügels aufweist. Hierbei werden die zweiten Befestigungsabschnitte von zwei in einem Abstand voneinander angeordneten Wänden gebildet, die an ihrer Oberseite durch einen Rücken miteinander verbunden sind. Der Abstand zwischen den beiden Wänden ist der Dicke der vornliegenden Seitenwand des Wischblatthauptbügels angepaßt, und die beiden Wände bilden somit einen nach unten offenen Schlitz. Mindestens eine der beiden Wände ist federelastisch auslenkbar und mindestens eine der beiden Wände weist an ihrem unteren Rand einen Rastvorsprung auf, der den unteren Rand der Seitenwand des Hauptbügels untergreifen kann.

Ein wesentlicher Gedanke der Erfindung besteht nun darin, den Durchbruch im Rücken, der die beiden Wände der zweiten Befestigungsabschnitte verbindet, zu vermeiden. Gemäß den kennzeichnenden Merkmalen des Anspruchs 1 wird das dadurch erreicht, daß eine der beiden Wände der zweiten Befestigungsabschnitte zumindest an ihrem unteren Rand breiter ist als die andere Wand und daß nur in den seitlich überstehenden Bereichen der breiteren Wand jeweils ein Rastvorsprung vorhanden ist. Dabei ist es prinzipiell gleichgültig, ob die in unmittelbarer Nähe bzw. unmittelbar an der Windleitschaufel befindliche Wand die breitere und die von der Windleitschaufel weiter entfernte Wand die schmalere ist oder umgekehrt. Durch diese Maßnahmen ist es möglich, die zweiten Befestigungsabschnitte ohne querschnittsverringernden schlitzförmigen Durchbruch in dem die beiden Wände verbindenden Rücken herzustellen. Die Herstellung der Windleitschaufel wird vereinfacht und die Festigkeit der Befestigungsabschnitte und damit die Sicherheit der Verbindung zwischen Windleitschaufel und Wischblatt wird erhöht.

Zur Montage der erfindungsgemäßen Windleitschaufel am Wischblatt, wird die Windleitschaufel mit ihren zweiten Befestigungsabschnitten von oben her im Bereich von entsprechenden Durchbrüchen im Rücken des Hauptbügels auf die in Fahrtrichtung vornliegende Seitenwand des Hauptbügels aufgerastet. Somit wird die Windleitschaufel durch die Rastverbindung bereits in Montageposition am Wischblatt gehalten. Nunmehr kann in einfacher Weise die Schraubverbindung mit den ersten Befestigungsabschnitten hergestellt werden.

Wenn die Windleitschaufel für die Montage an ein Wischblatt vorgesehen ist, bei welchem zwischen der Seitenwand des Hauptbügels und einem zwischen den Seitenwänden des Hauptbügels angeordneten untergeordneten Bügel des Traggestelles sehr wenig Platz zu Verfügung steht, empfiehlt sich eine Ausbildung der zweiten Befestigungsabschnitte gemäß Anspruch 2. Da die federelastisch auslenkbare Wand, welche bei der Montage zwischen die Seitenwand des Hauptbügels und einen untergeordneten Bügel eingeschoben werden muß, nicht die Rastvorsprünge trägt, ist für diese Wand ein ziemlich schmaler Zwischenraum ausreichend.

Vorteilhaft ist es weiterhin, wenn die breitere Wand der zweiten Befestigungsabschnitte im wesentlichen nur dort breiter ist, wo es erforderlich ist, nämlich am unteren Rand, weil dort in den verbreiterten Abschnitten die Rastvorsprünge anzuordnen sind. Als optimal hat sich herausgestellt, gemäß Anspruch 3, die breitere Wand in einer sich nach unten verbreiternden Trapezform auszubilden, wobei die obere Schmalseite die gleiche Breite aufweist, wie die insgesamt rechteckig ausgebildete andere Wand.

Eine Erleichterung des Aufrastens der zweiten Befestigungsabschnitte auf die Seitenwand des Hauptbügels ist dadurch erreichbar, daß gemäß Anspruch 4 sowohl die Rastvorsprünge an der einen Wand als auch der untere Rand der anderen Wand der zweiten Befestigungsabschnitte einwärts in den Schlitz gerichtete Auflaufschrägen besitzen.

Gemäß Anspruch 5 wird eine kostengünstige Herstellung auch dadurch erreicht, daß die Windleitschaufel einschließlich der zweiten Befestigungsabschnitte einstückig aus Kunststoff hergestellt ist.

Um eine problemlose Befestigung der Windleitschaufel auch an solchen Wischblättern zu gewährleisten, die nicht mit speziellen Befestigungsmitteln für das Zusammenwirken mit den ersten Befestigungsabschnitten für eine Schraubverbindung ausgestattet sind, gehört zu jeder Windleitschaufel gemäß Anspruch 6 zu jedem ersten Befestigungsabschnitt ein separates, profiliertes Halteblech. Dieses Halteblech ist zwischen der Befestigungsschraube und einer entsprechenden Fläche des ersten Befestigungsabschnittes anzuordnen und hintergreift nach der Montage der WindleitschaufeI form- und/oder kraftschlüssig den unteren Rand der Seitenwand des Hauptbügels des Wischblattes. Diese Ausgestaltung ist insbesondere von Vorteil für die Nachrüstung geeigneter, bereits vorhandener Wischblätter.

Insbesondere dann, wenn zwischen der Innenseite des Hauptbügels und einem in dem Querschnitt des Hauptbügels angeordneten oder in diesen Querschnitt eintauchenden untergeordneten Wischblattbügel wenig Zwischenraum vorhanden ist, sollte das Klemmblech aus Federstahl gefertigt sein. Für eine funktionssichere Befestigung der Windleitschaufel am Hauptbügel und für einen gewissen Ausgleich von Toleranzen empfiehlt es sich, daß gemäß Anspruch 7 der Winkel, welchen die beiden zueinander abgewinkelten Abschnitte des Klemmbleches einschließen, geringfügig kleiner ist als 90°. Durch die so erreichte federelastische Anlage des die vornliegende Seitenwand des Hauptbügels hintergreifenden Abschnittes des Klemmbleches wird eine sichere Verspannung der ersten Befestigungsabschnitte am Hauptbügel erreicht. Da andererseits die vornliegende Seitenwand des Hauptbügels nicht so hoch ist wie die Anlagefläche der ersten Befestigungsabschnitte, ist aus dem die vornliegende Seitenwand hintergreifenden Abschnitt des Klemmbleches an entsprechender Stelle ein Bereich freigespart und in Richtung auf die Windleitschaufel umgebogen. Im montierten Zustand der Windleitschaufel untergreift dieser umgebogene Bereich den unteren Rand der vornliegenden Seitenwand des Hauptbügels. Für einen weiteren Ausgleich von Toleranzen in Bezug auf die Höhe der vornliegenden Seitenwand des Hauptbügels wird eine vorteilhafte Ausgestaltung des Klemmbleches gemäß Anspruch 8 vorgeschlagen.

Da eine relativ lange, aus Kunststoff gefertigte Windleitschaufel über eine gewisse Elastizität verfügt und bei entsprechender Krafteinwirkung durch die auftreffende Luftströmung über ihre Länge einer unerwünschten elastischen Formänderung unterworfen ist, ist eine Anordnung der ersten und der zweiten Befestigungsabschnitte in Bezug auf die Länge der Windleitschaufel gemäß Anspruch 9 vorteilhaft. Durch diese Anordnung wird die elastische Verformung der Windleitschaufel gering gehalten und eine gute seitliche Führung am Wischblatt gewährleistet.

Nachfolgend wird die Erfindung an Ausführungsbeispielen näher erläutert. In den zugehörigen Zeichnungen zeigen:
- Fig. 1: ein Wischblatt mit montierter Windleitschaufel (Ansicht auf die in Fahrtrichtung hintenliegende Seite),
- Fig. 2: die Draufsicht auf das Wischblatt mit montierter Windleitschaufel von Figur 1,
- Fig. 3: eine Windleitschaufel (Ansicht auf die in Fahrtrichtung hintenliegende Seite),
- Fig. 4: den Ausschnitt A aus Figur 3 in vergrößerter Darstellung,
- Fig. 5: den Schnitt V - V aus Figur 3 in vergrößerter Darstellung,
- Fig. 6: den Schnitt VI - VI aus Figur 3, ergänzt durch den Hauptbügel und Befestigungselemente in vergrößerter Darstellung,
- Fig. 7: das Klemmblech aus Figur 6 als Detail in Schnittdarstellung und
- Fig. 8: das Klemmblech aus Figur 7 in Seitenansicht.

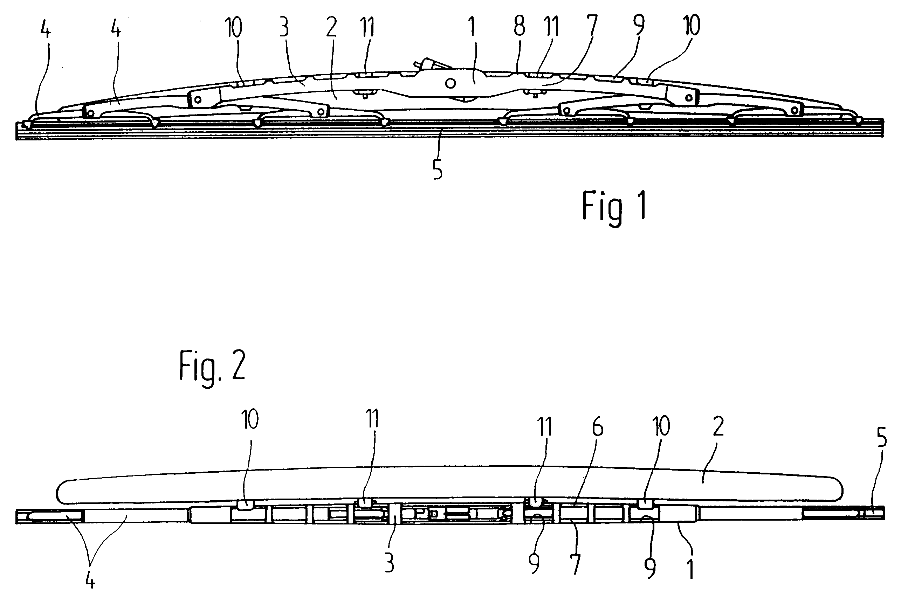

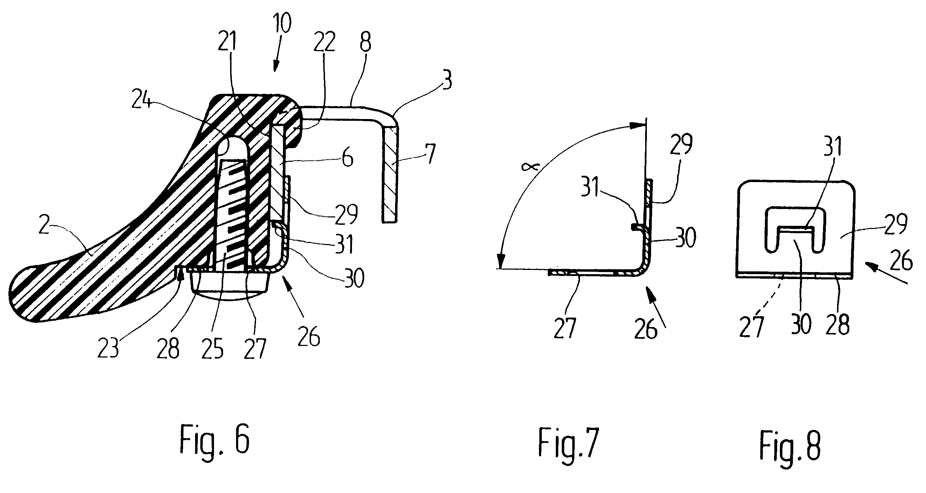

Das in den Figuren 1 und 2 dargestellte Wischblatt 1 mit montierter Windleitschaufel 2 weist einen Hauptbügel 3 und, mehrere untergeordnete Bügel 4 auf, welche insgesamt das Traggestell bilden. Dieses Traggestell trägt die Wischleiste 5 und führt diese beim Wischvorgang über die nicht dargestellte zu reinigende Scheibe eines Kraftfahrzeuges. Der Hauptbügel 3 weist eine im Querschnitt im wesentlichen U-förmige Gestalt auf (Figur 6), wobei sich zwei Seitenwände 6, 7 von einem die Seitenwände 6, 7 verbindenden Rücken 8 nach unten in Richtung auf die zu reinigende Scheibe erstrecken und der Rücken 8 Druchbrüche 9 aufweist, die sich in der Breite bis an die Seitenwände 6, 7 erstrecken.

Die Windleitschaufel 2 weist zwei erste Befestigungsabschnitte 10 zum Anschrauben und zwei zweite Befestigungsabschnitte 11 zum Aufrasten auf, mit denen sie jeweils im Bereich eines Durchbruches 9 an der in Fahrtrichtung vornliegenden Seitenwand 6 des Hauptbügels 3 befestigt ist. Bei der Montage der Windleitschaufel 2 wird diese vorteilhaft zuerst mit den zweiten Befestigungsabschnitten 11 von oben im Bereich entsprechender Durchbrüche 9 auf die vornliegende Seitenwand 6 aufgerastet, womit die ersten Befestigungsabschnitte 10 in Montageposition gebracht und in dieser gehalten werden. Nunmehr wird die Schraubverbindung zwischen den ersten Befestigungsabschnitten 10 und der vornliegenden Seitenwand hergestellt.

Aus den Figuren 1 und 2 ist auch ersichtlich, daß die Windleitschaufel 2 sich nahezu über die gesamte Länge des Traggestells erstreckt und somit nur geringfügig kürzer ist als dieses. Bezogen auf die Längserstreckung der Windleitschaufel 2 ist jeweils ein erster Befestigungsabschnitt 10 etwa ein Viertel der Länge der Windleitschaufel 2 von jeweils einem Ende der Windleitschaufel 2 entfernt an dieser angeordnet. Die zweiten Befestigungsabschnitte 11 sind zwischen den beiden ersten Befestigungsabschnitten 10 angeordnet und teilen bei grober Betrachtung den Abstand zwischen den zwei ersten Befestigungsabschnitten 10 in etwa drei gleichlange Teilstücke ein. Bei diesen Betrachtungen sollen Abweichungen bis etwa ein Drittel von gleichen Teilstücklängen zulässig sein. Die Anordnungspunkte der einzelnen Befestigungsabschnitte 10, 11 sind dabei von der Geometrie des Hauptbügels 3, insbesondere von den Orten, an denen sich Durchbrüche 9 im Rücken 8 des Hauptbügels 3 befinden, abhängig.

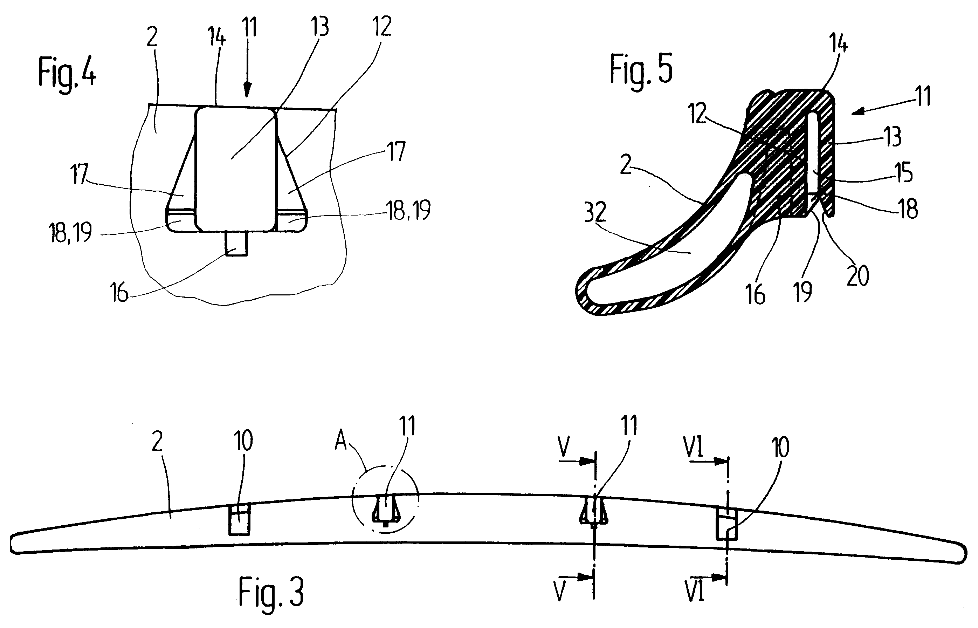

Die soeben beschriebene Anordnung der ersten und zweiten Befestigungsabschnitte 10 und 11 an der Windleitschaufel 2 ist auch gut aus Figur 3 ersichtlich. Außerdem ist hier grob ersichtlich, daß die ersten und zweiten Befestigungsabschnitte 10 und 11 unterschiedlich ausgebildet sind.

Aus den Figuren 4 und 5 ist eine vorteilhafte Ausbildung der zweiten Befestigungsabschnitte 11 gemäß der Erfindung ersichtlich. Die zweiten Befestigungsabschnitte 11 sind gleich aufgebaut, so daß weiterhin nur noch ein solcher Befestigungsabschnitt 11 beschrieben wird. Zwei Wände 12 und 13 liegen in einem Abstand, der der Dicke der vornliegenden Seitenwand 6 des Hauptbügels 3 angepaßt ist, einander gegenüber und sind an ihrem oberen Rand durch einen Rücken 14 miteinander verbunden, wobei der Rücken 14 außerdem mit der Windleitschaufel 2 verbunden ist. Zwischen den beiden Wänden 12, 13, wovon die Wand 12 unmittelbar an/oder in unmittelbarer Nähe der Windleitschaufel 2 und die Wand 13 weiter entfernt von der Windleitschaufel 2 angeordnet ist, ist gewissermaßen ein nach unten offener Schlitz 15 gebildet. Die Wand 12 ist relativ starr ausgebildet und über eine zusätzliche Versteifungsrippe 16 mit der Windleitschaufel 2 verbunden. Außerdem ist deutlich aus Figur 4 erkennbar, daß die elastisch auslenkbare Wand 13 eine rechteckige Form besitzt und daß die Wand 12 eine sich nach unten erweiternde, als trapezförmig zu bezeichnende Form aufweist, wobei die Breite der oberen Schmalseite der Breite der Wand 13 entspricht. Die Wand 12 besitzt somit die Bereiche 17, welche seitlich über Wand 13 überstehen und am unteren Rand am breitesten sind. In den seitlich überstehenden Bereichen 17 ist an den unteren Rand der Wand 12 jeweils ein Rastvorsprung 18 angeformt, der im Querschnitt (Figur 5) betrachtet in den Schlitz 15 hineinragt. Die Rastvorsprünge 18 sind dazu bestimmt, den unteren Rand der vornliegenden Seitenwand 6 des Hauptbügels 3 zu unterrasten. Wie bereits in der Vorteilsbeschreibung erwähnt, weisen die Rastvorsprünge 18 und der untere Rand der Wand 13 im Querschnitt betrachtet in den Schlitz 15 hineinverlaufende Auflaufschrägen 19 bzw. 20 auf, welche das Aufrasten der zweiten Befestigungsabschnitte 11 auf die vornliegende Seitenwand 6 des Hauptbügels 3 erleichtern.

Die Figuren 6, 7 und 8 zeigen ein Ausführungsbeispiel für eine schraubbare Befestigung der Windleitschaufel 2 mit den ersten Befestigungsabschnitten 10, wobei diese Befestigung auch gut geeignet ist für eine spätere Nachrüstung bereits vorhandener Wischblätter mit erfindungsgemäßen Windleitschaufeln 2. Der gezeigte Befestigungsabschnitt 10 weist eine Anlagefläche 21 auf, welche im montiertem Zustand der Windleitschaufel 2 außen an der vornliegenden Seitenwand 6 des Hauptbügels 3 anliegt. An den oberen Rand dieser Anlagefläche 21 ist ein hakenförmiges Gebilde 22 angeformt, welches den oberen Rand der vornliegenden Seitenwand 6 übergreifen bzw. hintergreifen kann. Am unteren Rand der Anlagefläche 21 erstreckt sich quer zu dieser in Richtung zur Windleitschaufel 2 hin eine weitere Fläche 23, von der aus sich eine Einschrauböffnung 24 in Form eines Sackloches für eine Befestigungsschraube 25 in den Befestigungsabschnitt 10 hinein erstreckt. Diese Einschrauböffnung 24 verläuft also mit ihrer geometrischen Achse parallel zu der Seitenwand 6.

In diesem Ausführungsbeispiel gehört zu der erfindungsgemäßen Windleitschaufel 2 ein separates Klemmblech 26 aus Federstahl, wobei dieses Klemmblech 26 im Vergleich mit den Seitenwänden 6 , 7 des Hauptbügels 3 relativ dünn ist und im wesentlichen von den zueinander abgewinkelten Abschnitten 28 und 29 gebildet wird. Die Abschnitte 28 und 29 schließen dabei einen Winkel α ein, der geringfügig kleiner ist als 90°. Das Loch 27 für die Befestigungsschraube 25 ist in den Abschnitt 28 des Klemmbleches 26 eingebracht. Aus dem Abschnitt 29 des Klemmbleches 26 hingegen ist eine Federzunge 30 freigespart, deren freies Ende als Bereich 31 einwärts in Richtung auf die Windleitschaufel 2 umgebogen ist und im montierten Zustand der Windleitschaufel 2 den unteren Rand der Seitenwand 6 des Hauptbügels 3 untergreift und abstützt. Der Bereich 31 ist dabei um einen gewissen Betrag schmaler als die Dicke der Seitenwand 6, d. h. der Bereich 31 kommt bei montierter Windleitschaufel 2 im Normalfall nicht zur Anlage mit der Anlagefläche 21 des Befestigungsabschnittes 10. Damit wird eine ausreichende Beweglichkeit für die Federzunge 30 mit dem Bereich 31 ermöglicht. Bei der Verspannung des Klemmbleches 26 am Befestigungsabschnitt 10 und an der Seitenwand 6 des Hauptbügels 3 ist die Federzunge 30 mit dem Bereich 31 federelastisch aus ihrer entspannten Stellung auslenkbar, womit auch gewisse Toleranzen ausgleichbar sind. Der übrige Teil des Abschnittes 29 des Klemmbleches 26 hintergreift im montiertem Zustand der Windleitschaufel 2 die vornliegende Seitenwand 6 des Hauptbügels 3 und liegt mit entsprechender Vorspannung an deren Innenseite an. Somit wird mit den ersten Befestigungsabschnitten 10 jeweils die in Figur 6 dargestellte form- und/oder kraftschlüssige Verbindung von Windleitschaufel 2 und Wischblatt 1 ermöglicht.

Aus Figur 5 ist noch ersichtlich, daß das flügelartige Profil der Windleitschaufel 2 einen durchgehenden oder mehrere voneinander getrennte Hohlräume 32 aufweisen kann, was eine Material- und Gewichtseinsparung ermöglicht.

### Bezugszeichen

- 1 -: Wischblatt
- 2 -: Windleitschaufel
- 3 -: Hauptbügel
- 4 -: untergeordnete Bügel
- 5 -: Wischleiste
- 6 -: (vornliegende) Seitenwand
- 7 -: (hintenliegende) Seitenwand
- 8 -: Rücken
- 9 -: Durchbruch
- 10 -: erster Befestigungsabschnitt
- 11 -: zweiter Befestigungsabschnitt
- 12 -: Wand
- 13 -: Wand
- 14 -: Rücken
- 15 -: Schlitz
- 16 -: Versteifungsrippe
- 17 -: (seitlich überstehender) Bereich
- 18 -: Rastvorsprung
- 19 -: Auflaufschräge
- 20 -: Auflaufschräge
- 21 -: Anlagefläche
- 22 -: hakenförmiges Gebilde
- 23 -: Fläche
- 24 -: Einschrauböffnung
- 25 -: Befestigungsschraube
- 26 -: Klemmblech
- 27 -: Loch
- 28 -: Abschnitt (des Klemmbleches)
- 29 -: Abschnitt (des Klemmbleches)
- 30 -: Federzunge
- 31 -: Bereich
- 32 -: Hohlraum
- α -: Winkel

## Patentansprüche

1. Windleitschaufel (2) für ein Wischblatt (1) einer Scheibenwischervorrichtung, insbesondere für Kraftfahrzeuge, welche an der in Fahrtrichtung vornliegenden Seitenwand (6) des im Querschnitt im wesentlichen U-förmigen Hauptbügels (3) des Wischblattes (1) mit entsprechenden ersten Befestigungsabschnitten (10) anzuschrauben ist und welche mit zusätzlichen zweiten Befestigungsabschnitten (11) in Form von zwei gegenüberliegenden, einen nach unten offenen Schlitz (15) bildenden Wänden (12, 13), die an ihre Oberseite durch einen Rücken (14) miteinander verbunden sind, wobei mindestens eine der zwei Wände (12, 13) federelastisch auslenkbar und mindestens eine dar beiden Wände (12, 13) an ihrem unteren Rand mit einem Rastvorsprung (18) versehen ist, im Bereich von Durchbrüchen (9) im Rücken (8) des Hauptbügels (3) auf der vornliegenden Seitenwand (6) zu verrasten ist, dadurch **gekennzeichnet**, daß eine der beiden Wände (12, 13) der jeweils zweiten Befestigungsabschnitte (11) zumindest an ihrem unteren Rand breiter ist als die andere der beiden Wände (12, 13) und daß diese zumindest an ihrem unteren Rand breitere Wand (12 oder 13) nur den seitlich überstehenden Bereichen (17) jeweils einen Rastvorsprung (18) trägt, der den unteren Rand der vornliegenden Seitenwand (6) des Hauptbügels (3) untergreifen kann.

2. Windleitschaufel nach Anspruch 1, dadurch **gekennzeichnet**, daß die unmittelbar an der Windleitschaufel (2) befindliche Wand (12) der jeweils zweiten Befestigungsabschnitte (11) relativ starr ausgebildet ist, zumindest am unteren Rand breiter ist als die von der Windleitschaufel (2) weiter entfernte Wand (13) und an den seitlich überstehenden Bereichen (17) am unteren Rand die Rastvorsprünge (18) trägt und daß nur die von der Windleitschaufel (2) weiter entfernte Wand (13) federelastisch auslenkbar ist.

3. Windleitschaufel nach einem der vorhergehenden Ansprüche, dadurch **gekennzeichnet**, daß die unmittelbar an der Windleitschaufel (2) befindliche Wand (12) eine sich nach unten verbreiternde Form, insbesondere eine Trapezform, und die von der Windleitschaufel (2) weiter entfernte Wand (13) eine rechteckige Form mit der Breite der oberen schmalen Trapezseite der Wand (12) aufweist.

4. Windleitschaufel nach einem der vorhergehenden Ansprüche, dadurch **gekennzeichnet**, daß die Rastvorsprünge (18) und/oder der untere Rand der Wand (13) einwärts in den Schlitz (15) gerichtete Auflaufschrägen (19, 29) aufweisen.

5. Windleitschaufel nach einem der vorhergehenden Ansprüche, dadurch **gekennzeichnet**, daß die Windleitschaufel (2) einschließlich der zweiten Befestigungsabschnitte (11) einstückig aus Kunststoff hergestellt ist.

6. Windleitschaufel nach einem der vorhergehenden Ansprüche, wobei die ersten Befestigungsabschnitte (10) eine Anlagefläche (21) zur Anlage an die vornliegende Seitenwand (6) des Hauptbügels (3) und am oberen Rand dieser Anlagefläche (21) ein hakenförmiges Gebilde (22) zum formschlüssigen Übergreifen des oberen Randes der vornliegenden Seitenwand (6) des Hauptbügels (3) sowie am unteren Rand der Anlagefläche (21) eine quer zu dieser verlaufende Fläche (23), in welche eine Einschrauböffnung (24) für eine Befestigungsschraube (25) eingearbeitet ist, aufweisen, dadurch **gekennzeichnet**, daß zu der Windleitschaufel (2) zu jedem ersten Befestigungsabschnitt (10) ein separates, profiliertes Klemmblech (26), insbesondere aus Federstahl, gehört, welches zwischen der Befestigungsschraube (25) und der Fläche (23) des ersten Befestigungsabschnittes (10) anzuordnen ist und nach der Montage der Windleitschaufel (2) den unteren Rand der vornliegenden Seitenwand (6) des Hauptbügels (3) form- und/oder kraftschlüssig hintergreift.

7. Windleitschaufel nach Anspruch 6, dadurch **gekennzeichnet**, daß das Klemmblech (26) verhältnismäßig dünn ist, daß das Klemmblech (26) Abschnitte (28) und (29) aufweist, die zueinander abgewinkelt sind und einen Winkel (α) einschließen, der geringfügig kleiner als 90° ist, daß der eine Abschnitt (28) ein Loch (27) für die Befestigungsschraube (25) aufweist und daß aus dem anderen Abschnitt (29) ein Bereich (31) freigespart und so in Richtung auf die Windleitschaufel (2) umgebogen ist, daß dieser Bereich (31) nach Montage der Windleitschaufel (2) den unteren Rand der vorderen Seitenwand (6) des Hauptbügels (3) untergreift.

8. Windleitschaufel nach Anspruch 7, dadurch **gekennzeichnet**, daß aus dem Abschnitt (29) des Klemmbleches (26) eine Federzunge (30) freigespart ist, deren freies Ende als Bereich (31) in Richtung auf die Windleitschaufel (2) umgebogen ist, wobei der umgebogene Bereich (31) schmaler ist als die Dicke der vornliegenden Seitenwand (6).

9. Windleitschaufel nach einem der vorhergehenden Ansprüche, dadurch **gekennzeichnet**, daß die Windleitschaufel (2) geringfügig kürzer ist als das Traggestell des Wischblattes (1), daß zwei erste Befestigungsabschnitte (10) jeweils annähernd ein Viertel der Länge der Windleitschaufel (2) von dem betreffenden Ende der Windleitschaufel (2) entfernt an dieser angeordnet sind und daß zwei zweite Befestigungsabschnitte (11) so zwischen den zweie ersten Befestigungsabschnitten (10) an der Windleitschaufel (2) angeordnet sind, daß sie den Abstand zwischen den zwei ersten Befestigungsabschnitten (10) grob betrachtet in drei etwa gleich große Teile aufteilen.

## Claims

1. A wind deflector (2) for a wiper blade (1) of a windshield wiper device, especially for motor vehicles, which have to be fixed by screws at respective fastening sections (10) on the side wall (6) disposed in front of the driving direction of the generally U-shaped main bracket (3) of the wiper blade (1), and which has additional second fastening sections (11) in the form of two wall (12, 13) facing each other and forming a downward open slot (15), the two walls are connected to one another at top sides thereof by a spine (14), wherein at least one of said two walls (12, 13) can be deflected in a springy manner and at least one of said two walls (12, 13) includes a catching projection (18) at its lower edge, to be locked in the area of openings (9) in the spine (8) of the main bracket (3) at the front lying side wall (6), characterized in that one of said two walls (12, 13) of each of the second fastening sections (11) is wider at least at said lower edge than the other of said two walls (12, 13) and that said wall (12 or 13) being at least at the lower edge wider defining each a catching projection (18) only at the laterally projecting areas (17), said catching projection engage under the lower edge of the front lying side wall (6) of the main bracket (3).

2. The wind deflector according to claim 1, characterized in that said wall (12) associated directly to said wind deflector (2) of each second fastening section (11) being relatively rigid, and being wider at least at the lower edge as said wall (13) disposed further from said wind deflector (2) and carries said catching projections (18) at the lateral projecting areas (17) at the lower edge, and that only the wall (13) being further disposed from said wind deflector (2) is deflectable in a springy manner.

3. The wind deflector according to any of the preceding claims, characterized in that said wall (12) being directly associated to the wind deflector (2) widens downward and defines particularly a trapezoidal shape and said wall (13) being further disposed from said wind deflector (2) defines a rectangular shape that has a width of a upper narrow trapezoidal side of said wall (12).

4. The wind deflector according to any of the preceding claims, characterized in that said catching projections (18) and/or the lower edge of the wall (13) includes inclined impact surfaces (19, 20) that are directed inward towards a slot (15).

5. The wind deflector according to any of the preceding claims, characterized in that said wind deflector (2) including the second fastening sections (11) is manufactured in one piece from a plastic material.

6. The wind deflector according to any of the preceding claims, wherein said first fastening sections (10) have a support surface (21) to rest on the front lying side wall (6) of the main bracket (3), and have at the upper edge of said support surface (21) a hook-shaped structure (22) for form-closed engaging an upper edge of the front lying side wall (6) of the main bracket (3) and have at the lower edge of said support surface (21) a surface (23) running crosswise to said lower edge, said surface having a screw opening (24) for a fastening screw (25), characterized in that a separate, profiled clamping element (26), preferably made of spring steel, is provided in each first fastening section (10) to the wind deflector (2), be arranged between said fastening screw (5) and said surface (23), and after the installation of said wind deflector (2), said clamping element (26) engages form-closed and/or force-locking from behind the lower edge of the front lying side wall (6) of the main bracket (3).

7. The wind deflector according to claim 6, characterized in that said clamping element (26) is relatively thin, that the clamping element (26) has sections (28) and (29) which are bent towards one another and form an angle (α) that is slightly less than 90°, that the one section (28) having a hole (27) for receiving said fastening screw (25), and an area (31) recessed from the other section (29) is bent in a direction towards said wind deflector (2), that after installation of said wind deflector (2) said area (31) engages under the lower edge of the front lying side wall (6) of the main bracket (3).

8. The wind deflector according to claim 7, characterized in that a spring tongue (30) is recessed from the section (29) of said clamping element (26), the free end of which is bent as an area (31) in the direction towards said wind deflector (2), said bent area (31) being more narrow than the thickness of the front lying side wall (6).

9. The wind deflector according to any of the preceding claims, characterized in that said wind deflector (2) has a length that is slightly shorter than the length of the carrying device of the wiper blade (1), that two first fastening sections (10) are each disposed away from and attached to approximately one fourth of said length of said wind deflector (2) an end thereof and that said two second fastening sections (11) are disposed between said first fastening sections (10) so that said second fastening sections generally divide a distance defined between said first fastening sections (10) into three portions of approximately equal size.

## Revendications

1. Ailette déflectrice d'air (2) destinée à une raclette d'essuyage (1) d'un dispositif essuie-glace, particulièrement pour véhicules à moteur, qui se visse sur la paroi latérale (6) située à l'avant dans le sens de marche de la pièce arquée principale (3) ayant la section approximativement en forme de U de la lame d'essuyage ou raclette d'essuie-glace (1) à l'aide de premières parties de fixation (10) et qui s'enclenche sur la paroi latérale avant (6) dans la zone d'ouvertures (9) à l'arrière (8) de la pièce arquée principale (3) à l'aide de secondes parties de fixation supplémentaires (11) sous forme de deux parois opposées (12, 13) formant une fente (15) ouverte vers le bas qui sont reliées l'une à l'autre au niveau de leur face supérieure par un dos (14), au moins une des deux parois (12, 13) pouvant être flèche élastiquement et au moins une des deux parois (12, 13) comportant une saillie à enclenchement (18) sur son bord inférieur, **caractérisée** en ce que l'une des deux parois (12, 13) des secondes parties de fixation respectives (11) au moins au niveau de son bord inférieur est plus large que l'autre des deux parois (12, 13) et en ce que cette paroi (12 ou 13) plus large au moins au niveau de son bord inférieur, seulement dans des zones en salle latéralement (17) porte chaque fois une saillie à enclenchement (18) qui peut coopérer avec le bord inférieur de la paroi latérale (6) située à l'avant de la pièce arquée principale (3).

2. Ailette déflectrice d'air selon la revendication 1, **caractérisée** en ce que la paroi (12) située immédiatement à côté de l'ailette déflectrice d'air (2) des secondes parties de fixation respectives (11) est réalisée de façon relativement rigide, au moins au niveau du bord inférieur est plus large que la paroi (13) plus écartée de l'ailette déflectrice d'air (2) et porte dans les zones (17) en saillie latéralement sur le bord inférieur les salles à enclenchement (18), et en ce que seule la paroi (13) plus écartée de l'ailette déflectrice d'air (2) peut être fléchie élastiquement.

3. Ailette déflectrice d'air selon l'une des revendications précédentes, **caractérisée** en ce que la paroi (12) située immédiatement à côté de l'ailette déflectrice d'air (2) a une forme qui va en s'élargissant vers le bas, particulièrement une forme trapézoïdale, et la paroi (13) plus écartée de l'ailette déflectrice d'air (2) a une forme rectangulaire ayant la largeur de la face trapézoïdale étroite supérieure de la paroi (12).

4. Ailette déflectrice d'air selon l'une des revendications précédentes, **caractérisée** en ce que les salles à enclenchement (18) et/ou le bord inférieur de la paroi (13) présentent des parties biseautées montantes (19, 29) orientées vers l'intérieur de la fente (15).

5. Ailette déflectrice d'air selon l'une des revendications précédentes, **caractérisée** en ce que l'ailette déflectrice d'air (2) y compris les secondes parties de fixation (11) est réalisée en une seule pièce en matière plastique.

6. Ailette déflectrice d'air selon l'une des revendications précédentes, dans laquelle les premières parties de fixation (10) présentent une surface de contact (21) pour être mises en contact avec la paroi latérale (6) située à l'avant de la pièce arquée principale (3) et sur le bord supérieur de cette surface de contact (21) une structure en forme de crochet (22) pour coopérer de façon positive avec le bord supérieur de la paroi latérale (6) située à l'avant de la pièce arquée principale (3), ainsi que sur le bord inférieur de la surface de contact (21) une surface (23) s'étendant transversalement à celle-ci, dans laquelle est incorporée un ouverture taraudée (24) pour une vis de fixation (25), **caractérisée** en ce qu'à l'ailette déflectrice d'air (2) à chaque première partie de fixation (10) est associée une tôle de serrage profilée séparée (26), particulièrement en acier à ressorts, qui s'agence entre la vis de fixation (25) et la surface (23) de la première partie de fixation (10) et après montage de l'ailette déflectrice d'air (2) coopère de manière positive et/ou forcée avec le bord inférieur de la paroi latérale (6) située à l'avant de la pièce arquée principale (3).

7. Ailette déflectrice d'air selon la revendication 6, **caractérisée** en ce que la tôle de serrage (26) est relativement mince, en ce que la tôle de serrage (26) présente des parties (28) et (29) disposées angulairement l'une par rapport à l'autre et faisant entre elles un angle (α) qui est peu inférieur à 90°, en ce que l'une (28) des parties comporte un trou (27) pour la vis de fixation (25), et en ce qu'une zone (31) est ménagée dans l'autre partie (29) et est donc repliée en direction de l'ailette déflectrice d'air (2), en ce que cette zone (31) après montage de l'ailette déflectrice d'air (2) coopère avec le bord inférieur de la paroi latérale avant (6) de la partie arquée principale (3).

8. Ailette déflectrice d'air selon la revendication 7, **caractérisée** en ce que dans la partie (29) de la tôle de serrage (26) est ménagée une langue élastique (30) dont l'extrémité libre est repliée en tant que zone (31) en direction de l'ailette déflectrice d'air (2), la zone repliée (31) étant plus étroite que l'épaisseur de la paroi latérale avant (6).

9. Ailette déflectrice d'air selon l'une des revendications précédentes, **caractérisée** en ce que l'ailette déflectrice d'air (2) est légèrement plus courte que la monture de support de la raclette d'essuie-glace (1), en ce que deux premières parties de fixation (10) sont disposées chaque fois approximativement à une distance d'un quart de la longueur de l'ailette déflectrice d'air (2) à partir de l'extrémité correspondante de l'ailette déflectrice (2) dans une position adjacente à celle-ci, et en ce que deux secondes parties de fixation (11) sont disposées dans une position adjacente à l'ailette déflectrice d'air (2) entre les deux premières parties de fixation (11) de sorte qu'elles partagent la distance entre les deux premières parties de fixation (10) approximativement en trois parties d'une dimension sensiblement identique.
